# EUROPÄISCHE PATENTSCHRIFT

(11) **EP 3 575 610 B1**
(45) Veröffentlichungstag und Bekanntmachung des Hinweises auf die Patenterteilung: **19.01.2022**
(21) Anmeldenummer: 18175114.0
(22) Anmeldetag: 30.05.2018
(51) Int. Cl.: F04D 19/04, F04D 29/059, F04D 29/063, F16C 33/66, F16N 7/12

(54) **VAKUUMPUMPE MIT BETRIEBSMITTELSPEICHER**
VACUUM PUMP WITH LUBRICANT RESERVOIR
POMPE À VIDE AVEC RÉSERVOIR DE LUBRIFIANT

(43) Veröffentlichungstag der Anmeldung: 04.12.2019
(73) Patentinhaber: PFEIFFER VACUUM GMBH, 35614 Asslar (DE)
(72) Erfinder: Leib, Uwe, 35781 Weilburg (DE); Gogol, Torsten, 35630 Eringshausen (DE); Koch, Bernhard, 35799 Barig-Selbenhausen (DE)
(74) Vertreter: Manitz Finsterwald Patent- und Rechtsanwaltspartnerschaft mbB

(56) Entgegenhaltungen:
- EP-A2- 1 921 322
- EP-A2- 2 728 195
- WO-A1-2018/046912
- WO-A2-2009/004378
- DE-A1- 2 555 902
- JP-A- 2017 075 695

## Beschreibung

Die vorliegende Erfindung betrifft eine Vakuumpumpe gemäß dem Oberbegriff des Anspruchs 1, insbesondere eine Turbomolekularvakuumpumpe, welche einen Rotor mit einer Rotorwelle, ein Drehlager zur Lagerung der Rotorwelle, ein flüssiges Betriebsmittel zur Versorgung des Drehlagers, und einen Betriebsmittelspeicher mit zum Speichern des Betriebsmittels geeignetem Speichermaterial aufweist. Solch eine Vakuumpumpe gemäß dem Oberbegriff des Anspruchs 1 ist der Art nach im Wesentlichen aus der WO 2018 / 046 912 A1 bekannt. Der Art nach im Wesentichen vergleichbare Vakuumpumpen gehen ferner aus der Druckschriften EP 2 728 195 A2 und JP 2017 075 695 A hervor. Ferner ist es aus der WO 2009 / 004 378 A2 bekannt, dass der Betriebsmittelspeicher einer Vakuumpumpe einen dochtartigen Übergabeabschnitt aufweisen kann, welcher das Betriebsmittel an ein Drehlager übergibt und sich an dieses gekrümmt anschmiegt.

Vakuumpumpen, welche Betriebsmittelspeicher zur Versorgung eines Drehlagers mit einem Betriebsmittel, insbesondere einem Schmiermittel, aufweisen, sind grundsätzlich bekannt. Der Betriebsmittelspeicher kann dabei an einem auch als Spritzmutter bezeichneten, konischen Abschnitt der Rotorwelle angeordnet sein, an welchen das Betriebsmittel übertragen wird. Durch die konische Ausformung erfährt das im Bereich eines geringeren Durchmessers des Abschnitts abgegebene Betriebsmittel während des Betriebs der Vakuumpumpe zentrifugale und kapillare Kräfte, wodurch das Betriebsmittel zu einem Bereich eines größeren Durchmessers des Abschnitts und damit zu dem Drehlager gefördert wird. Der Betriebsmittelspeicher weist zumeist ein Speichermaterial auf, welches mit dem Betriebsmittel getränkt ist.

Die Wahl des Speichermaterials hängt maßgeblich von den Eigenschaften sowie von dem späteren Einsatzgebiet der Vakuumpumpe ab. Die Vor- und Nachteile der bekannten Speichermaterialien werden folglich für den jeweiligen Einsatzzweck gegeneinander abgewogen. Dies bedeutet, dass stets Nachteile mit in Kauf genommen werden müssen.

Es ist daher eine Aufgabe der vorliegenden Erfindung, bei einer Vakuumpumpe der eingangs genannten Art die Betriebsmittelversorgung im Hinblick auf die Eigenschaften und den Einsatzzweck der Vakuumpumpe dahingehend zu verbessern, dass möglichst kein Material des Betriebsmittelspeichers in den Betriebsmittelkreislauf sowie in das Drehlager gelangt.

Diese Aufgabe wird durch eine Vakuumpumpe mit den Merkmalen des Anspruchs 1 gelöst.

Bei der erfindungsgemäßen Vakuumpumpe umfasst das Speichermaterial mindestens zwei verschiedene Materialien. Hierdurch können die jeweiligen Vorteile der verschiedenen Materialien für den Einsatz als Speichermaterial kombiniert werden. Bei einem solchen "Hybridspeicher" muss nicht mehr abgewogen werden, welches Material aufgrund seiner Vorteile einem anderen, ebenfalls vorteilhafte Eigenschaften aufweisenden Material vorzuziehen ist.

Erfindungsgemäß handelt es sich bei den Materialien des Speichermaterials um verschiedene Filzmaterialien, welche eine unterschiedlich große Neigung zu einem Herauslösen einzelner Filzfasern aufweisen, wobei das Filzmaterial, welches weniger zum Herauslösen der Filzfasern neigt, insbesondere ein Polyester, das Filzmaterial, welches mehr zum Herauslösen der Filzfasern neigt, insbesondere ein Polyimid, zumindest teilweise umgibt.

Dadurch wird vermieden, dass lose Filzfasern den Betrieb der Vakuumpumpe beeinträchtigen und z.B. in den Betriebsmittelkreislauf gelangen. Das eine Material kann dabei von dem anderen Material teilweise oder vollständig ummantelt werden. Das hinsichtlich des Herauslösens von Fasern kritischere Material kann mithilfe des anderen Materials gewissermaßen eingekapselt werden.

Dieses Konzept kann in einer nicht beanspruchten Variante auch bei anderen Materialien als Filzmaterialien angewendet werden. So braucht der Einsatz eines wegen seiner Vorteile gewünschten Materials nicht aufgrund seiner potentiellen Nachteile für die Vakuumpumpe verworfen zu werden.

So können z.B. die unterschiedlichen Materialien innerhalb des Betriebsmittelspeichers derart angeordnet werden, dass ihre jeweiligen Vorteile besonders gut ausgenutzt werden können. Beispielsweise können hochtemperaturfeste Materialien an Stellen des Betriebsmittelspeichers eingesetzt werden, an denen während des Betriebs - beispielsweise aufgrund von Reibung - eine besonders hohe Temperatur herrscht.

Bei dem Betriebsmittel handelt es sich insbesondere um ein Schmieröl zum Schmieren eines als Wälzlager ausgebildeten Drehlagers.

Vorteilhafte Ausführungsformen der Erfindung sind in den abhängigen Ansprüchen angegeben.

Gemäß einer Ausführungsform umfasst der Betriebsmittelspeicher mindestens zwei Bauteile, wobei mindestens ein Bauteil aus einem ersten Material besteht und mindestens ein weiteres Bauteil aus einem zweiten Material besteht, das von dem ersten Material verschieden ist.

Hierdurch kann der Betriebsmittelspeicher aus einzelnen Bauteilen, die jeweils aus einem der unterschiedlichen Materialien bestehen, zusammengesetzt werden. Insbesondere Form, Größe und Anordnung der Bauteile können zusätzlich zu den Materialien in Abhängigkeit von den jeweiligen Anforderungen gezielt ausgewählt werden. Bereits existierende Vakuumpumpen, deren Betriebsmittelspeicher aus Einzelteilen gleichen Materials bestehen, können mit einem erfindungsgemäßen Betriebsmittelspeicher nachgerüstet werden.

Bei den einzelnen Bauteilen kann es sich z.B. um eine Mehrzahl von übereinander gestapelten, jeweils scheiben- oder plattenförmigen Materiallagen handeln. Es ist alternativ möglich, kompliziertere Geometrien zu verwirklichen und z.B. vorzusehen, dass ein oder mehrere Bauteile jeweils ein oder mehrere andere Bauteile zumindest teilweise umgeben oder einschließen oder umschließen. Insbesondere können mehrere Bauteile ineinander, aufeinander oder nebeneinander gepackt werden. Beliebige paketartige Anordnungen von grundsätzlich beliebig geformten Bauteilen können realisiert werden.

Darüber hinaus ist es gemäß einer weiteren Ausführungsform möglich, dass die einzelnen Bauteile voneinander entfernt an unterschiedlichen Stellen der Vakuumpumpe angeordnet sind. Die dabei mit Abstand voneinander angeordneten Bauteile können durch geeignete Mittel miteinander in Verbindung stehen, um das Betriebsmittel zwischen den Bauteilen zu fördern. Die Verbindungsmittel können folglich bezogen auf das Betriebsmittel fördernd ausgebildet sein. Bei den Verbindungsmitteln kann es sich um Kanäle, z.B. in Form von kleinen Bohrungen, handeln, die eine Kapillarwirkung besitzen. Alternativ oder zusätzlich können die Verbindungsmittel durch einen oder mehrere Dochte gebildet werden.

Gemäß einer weiteren Ausführungsform sind die Materialien bezogen auf das Betriebsmittel jeweils sowohl speichernd als auch fördernd. Dies verbessert die Einsatzmöglichkeiten der Materialien.

Des Weiteren kann vorgesehen sein, dass das Filzmaterial aus einem Kunststoff bzw. aus Kunststofffasern hergestellt ist, vorzugsweise aus Polyester, Polyimid, Polyaramid oder PBO.

Filzmaterialien haben sich beim Einsatz in Betriebsmittelspeichern von Vakuumpumpen bewährt. Beispielsweise Filzmaterialien, welche aus Kunststoff hergestellt sind, können spezifische Eigenschaften aufweisen, die für den Einsatz als Speichermaterial von Vorteil sind.

Ein Polyesterfilz beispielsweise besitzt eine hohe Speicherfähigkeit und zeigt zudem eine geringe Neigung, dass einzelne Fasern aus dem Filzverbund herausgelöst werden.

Ein Polyimidfilz dagegen ist relativ temperatur- und verschleißfest und kann das Betriebsmittel besonders gut abgeben.

Zur Herstellung der Filze können die jeweiligen Kunststofffasern durch einen Nadelprozess verfestigt werden.

Vorzugsweise umfasst das Speichermaterial ausschließlich Filzmaterialien, die sich hinsichtlich einer oder mehrerer Eigenschaften voneinander unterscheiden und gemeinsam gewissermaßen einen "Hybridfilz" bilden.

In einer nicht beanspruchten Variante ist mindestens ein Material ein gesinterter Werkstoff, insbesondere ein gesinterter Kunststoff, vorzugsweise gesintertes, poröses UHMW-PE (UHMW = Ultra High Molecular Weight bzw. ultrahochmolekular; PE = Polyethylen).

Die Porosität gesinterter Werkstoffe und damit die gute Durchlässigkeit für Flüssigkeiten und Gase kann erfindungsgemäß als Vorteil genutzt werden.

Gemäß einer weiteren Ausführungsform wurde mindestens ein Material einer Oberflächenbehandlung, insbesondere einem Sengen und/oder einer Thermofixierung und/oder einer Beschichtung, unterzogen.

Durch die Oberflächenbehandlung können spezifische Eigenschaften der eingesetzten Materialien weiter verbessert oder überhaupt erst erzielt werden. Zudem kann die Förder- und/oder Speichereigenschaft eines Materials gezielt verändert werden. Des Weiteren kann ein Material beispielsweise durch eine Beschichtung eine erhöhte Verschleißfestigkeit insbesondere gegen Abrieb erhalten oder chemisch beständiger werden.

Vor diesem Hintergrund ist zu erwähnen, dass zwei Materialien, die aus einem identischen Grundmaterial bestehen, von denen jedoch eines einer Oberflächenbehandlung unterzogen wurde oder die unterschiedlichen Oberflächenbehandlungen unterzogen wurden, verschiedene Materialien im Sinne der Erfindung sind.

Gemäß einer weiteren Ausführungsform weist mindestens ein Material eine Stützstruktur, insbesondere ein Stützgitter, auf. Hierdurch kann dem Material eine erhöhte Formstabilität verliehen werden.

Bevorzugt ist an dem Betriebsmittelspeicher mindestens ein Übergabeabschnitt ausgebildet, welcher das Betriebsmittel an das Drehlager oder eine Fördereinrichtung übergibt, wobei der Übergabeabschnitt einen gekrümmten Kontaktbereich aufweist, welcher insbesondere einen Krümmungsradius größer oder gleich 0,2 mm aufweist. Durch eine derartige Geometrie des Übergabeabschnitts lassen sich zu feine und zu instabile Strukturen vermeiden, was insbesondere dann, wenn es sich bei dem betreffenden Material um einen Filz handelt, von Vorteil ist, da zu feine Strukturen zu einem Herauslösen von Fasern neigen könnten.

Der Übergabeabschnitt kann im Kontaktbereich konkav oder konvex gekrümmt sein.

Gemäß einer Weiterbildung ist sowohl das Speichermaterial des Betriebsmittelspeichers als auch der Übergabeabschnitt aus Filzmaterial hergestellt. So kann z.B. ein aus einem Filz bestehendes Bauteil in einem dem Drehlager oder dem Förderabschnitt zugewandten Randbereich mit einem z.B. nasenartigen Vorsprung oder mit einem konkav geformten Anlageabschnitt versehen sein, der als Übergabeabschnitt für das Betriebsmittel dient. Hierdurch kann die in alle Raumrichtungen zumindest im Wesentlichen gleiche Förderwirkung eines Filzmaterials für eine besonders wirksame Abgabe des Betriebsmittels ausgenutzt werden.

Gemäß einer weiteren Ausführungsform sind die Materialien miteinander verbunden, insbesondere durch Vernähen oder Verfilzen.

Hierdurch ergibt sich eine besonders gleichmäßige Förderung des Betriebsmittels und wird die Handhabung des Betriebsmittelspeichers vereinfacht, was vor allem für die Montage und/oder einen späteren Service vorteilhaft ist.

Bevorzugt sind die Materialien durch wenigstens ein Verbindungselement miteinander verbunden, wobei das Verbindungselement bezogen auf das Betriebsmittel fördernd ausgebildet ist.

Das Verbindungselement kann für mechanische Stabilität sorgen und gleichzeitig das Betriebsmittel fördern. Beispielsweise dann, wenn der Betriebsmittelspeicher mehrere Bauteile wie z.B. eine Mehrzahl gestapelter Materiallagen umfasst, können ein oder mehrere innerhalb oder außerhalb der Materiallagen und z.B. senkrecht zu den Materiallagen verlaufende Verbindungselemente die Materiallagen zusammenhalten. Langgestreckte Verbindungselemente können sich durch die Bauteile hindurch erstrecken. Hierfür können in den Bauteilen entsprechend der Querschnittsförm der Verbindungselemente geformte Aussparungen vorgesehen sein.

Wenn die Materialien des Betriebsmittelspeichers das Betriebsmittel gut speichern, aber weniger gut fördern können, dann kann zumindest ein wesentlicher Teil der Förderfunktion von dem oder den Verbindungselementen übernommen werden.

Das oder jedes Verbindungselement kann aus einem Material hergestellt sein, welches auch für die Materialien des Betriebsmittelspeichers in Frage kommt.

Gemäß einer weiteren Ausführungsform unterscheiden sich die Materialien bezogen auf das Betriebsmittel hinsichtlich ihres Filterwirkungsgrades voneinander, wobei das Material mit dem höheren Filterwirkungsgrad das Material mit dem niedrigeren Filterwirkungsgrad zumindest teilweise umgibt, oder umgekehrt.

Durch die erhöhte Filterwirkung im Außenbereich können z.B. Partikel aus dem Betriebsmittel herausgefiltert werden, bevor das Betriebsmittel den Innenbereich erreicht. Vorteilhaft ist dies insbesondere dann, wenn eine Übergabe von Betriebsmittel z.B. an das Drehlager der Rotorwelle oder an eine Fördereinrichtung über den Innenbereich des Betriebsmittelspeichers erfolgt. Vor allem das empfindliche Drehlager kann so vor einer Verschmutzung durch das Betriebsmittel geschützt werden.

Nachfolgend wird die Erfindung beispielhaft anhand vorteilhafter Ausführungsformen unter Bezugnahme auf die beigefügten Figuren beschrieben. Es zeigen:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6a: schematisch eine Ausführungsform eines Betriebsmittelspeichers einer nicht erfindungsgemäßen Vakuumpumpe,
- Fig. 6b: einen Schnitt längs der in Fig. 6a gezeigten Schnittlinie D-D,
- Fig. 7a: schematisch in einer Ansicht entsprechend Fig. 6a eine weitere Ausführungsform eines Betriebsmittelspeichers einer erfindungsgemäßen Vakuumpumpe,
- Fig. 7b: einen Schnitt längs der in Fig. 7a gezeigten Schnittlinie E-E,
- Fig. 8a: schematisch in einer Ansicht entsprechend Fig. 6a eine weitere Ausführungsform eines Betriebsmittelspeichers einer erfindungsgemäßen Vakuumpumpe,
- Fig. 8b: einen Schnitt längs der in Fig. 8a gezeigten Schnittlinie F-F,
- Fig. 9: schematisch in einer Ansicht entsprechend Fig. 6a eine weitere Ausführungsform eines Betriebsmittelspeichers einer nicht erfindungsgemäßen Vakuumpumpe, und
- Fig. 10: schematisch in einer Ansicht entsprechend Fig. 6a eine weitere Ausführungsform eines Betriebsmittelspeichers einer nicht erfindungsgemäßen Vakuumpumpe.

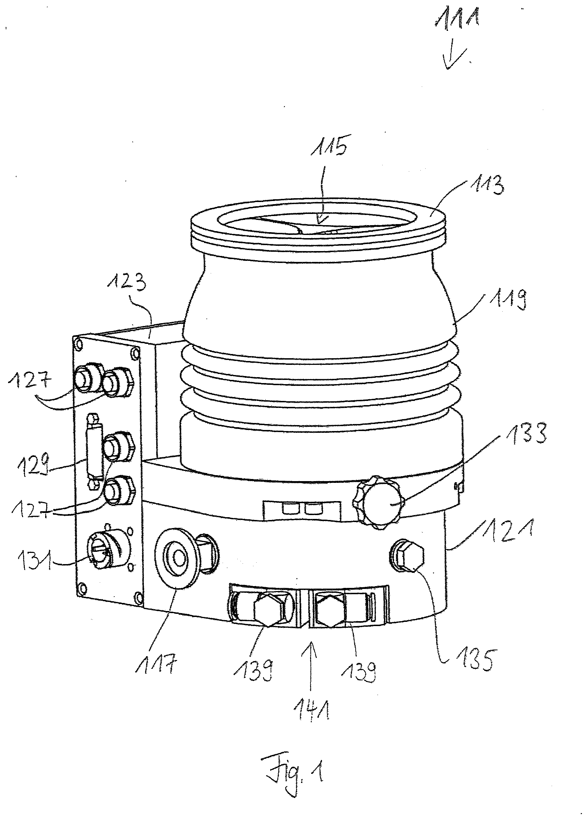

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

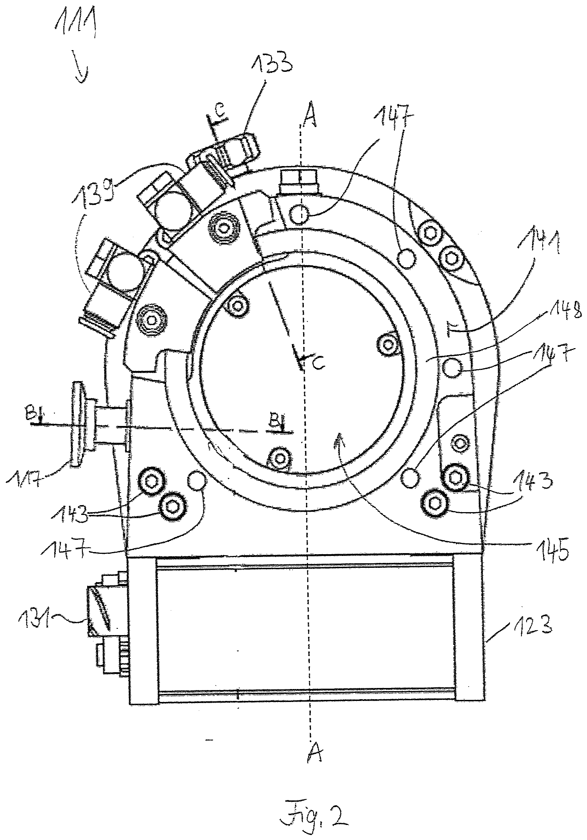

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

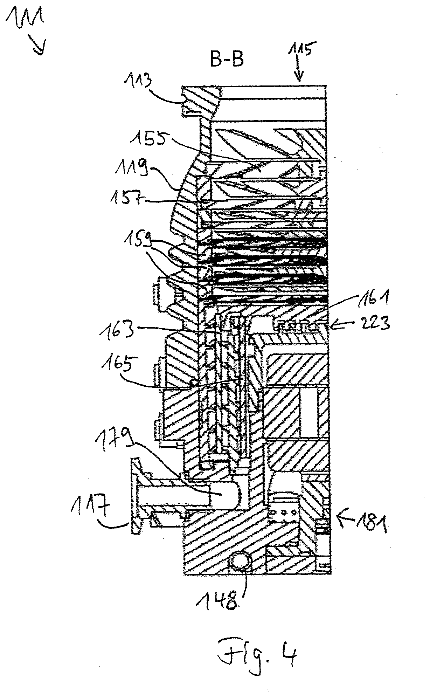

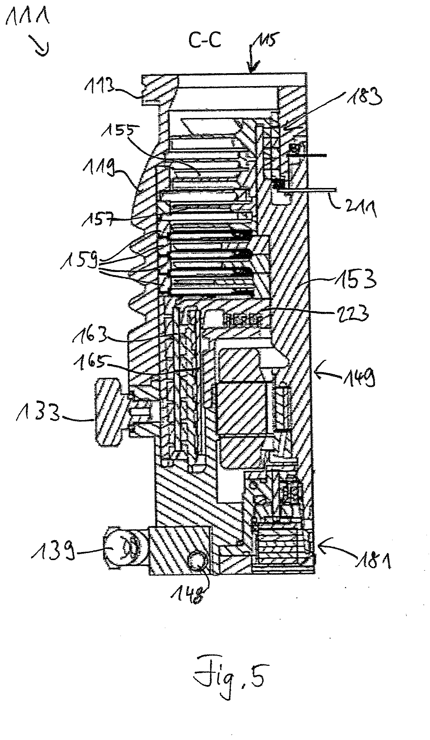

In den Figuren 2 bis 5 ist eine Kühlmittelleitung 148 dargestellt, in welcher das über die Kühlmittelanschlüsse 139 ein- und ausgeleitete Kühlmittel zirkulieren kann.

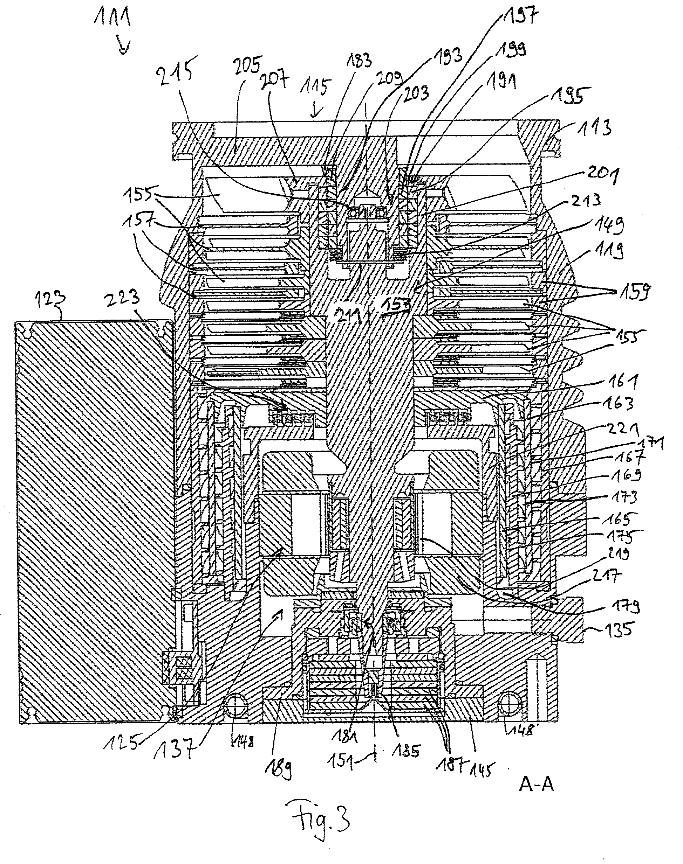

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Die nachstehend erläuterten Ausführungsbeispiele eines Betriebsmittelspeichers können in einer Turbomolekularpumpe verwendet werden, wie sie vorstehend beschrieben worden ist, können aber auch in anderen Vakuumpumpen zum Einsatz kommen.

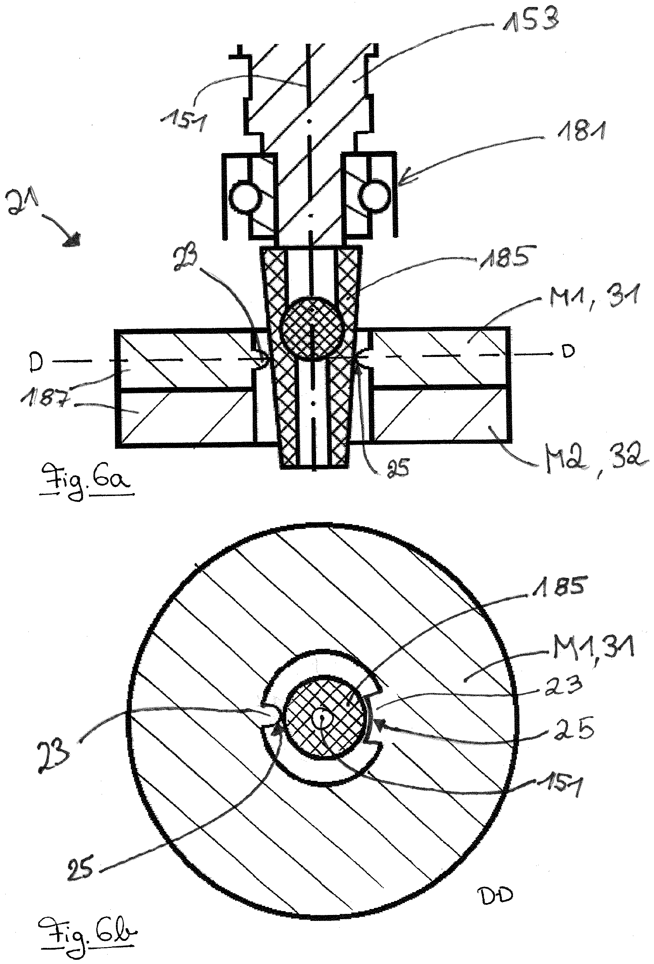

In Fig. 6a ist der untere Endbereich einer Rotorwelle 153 einer nicht erfindungsgemäßen Turbomolekularvakuumpumpe gezeigt, und zwar in einem Schnitt entlang der Rotationsachse 151 der Rotorwelle 153. Für die Rotorwelle 153 ist ein Drehlager 181 vorgesehen. Im Bereich des Drehlagers 181 ist an der Rotorwelle 153 eine Spritzmutter 185 vorgesehen, die von einem konischen Abschnitt der Rotorwelle 153 gebildet ist.

Die Spritzmutter 185 ist bereichsweise von einem Betriebsmittelspeicher 21 umgeben, der in dieser Ausführungsform zwei in Form von Materialscheiben 187 vorgesehene Bauteile 31, 33 umfasst. Die Bauteile 31, 33 sind aus zwei unterschiedlichen Materialien M1, M2 hergestellt. An dem Bauteil 31 aus dem ersten Material M1 sind zwei als Abstreifer dienende Übergabestellen 23 ausgebildet. Die Übergabestellen 23 stehen mittels gekrümmter Kontaktbereiche 25 mit der Spritzmutter 185 in Kontakt. Wie Fig. 6b exemplarisch zeigt, können die Kontaktbereiche 25 konvex oder konkav gekrümmt sein.

Der Betriebsmittelspeicher 21 ist während des Betriebs mit Schmieröl als Betriebsmittel für das Drehlager 181 getränkt und kann ein Bestandteil eines geschlossenen, eine Pumpe umfassenden Betriebsmittelkreislaufes sein und über eine oder mehrere Leitungen mit einem Betriebsmittelreservoir verbunden sein. Die verschiedenen Möglichkeiten zur Einbindung eines Betriebsmittelspeichers in eine Vakuumpumpe sind dem Fachmann grundsätzlich bekannt, weshalb hierauf nicht näher eingegangen zu werden braucht.

Wie im Einleitungsteil bereits erläutert, können durch die unterschiedlichen Materialien M1, M2 des Betriebsmittelspeichers 21 verschiedene Vorteile miteinander kombiniert werden. Beispielsweise ist das Material M1 besonders hitzefest und so dazu geeignet, mit der rotierenden Spritzmutter 185 in Kontakt zu treten, um das Bauteil 31 mit den Übergabestellen 23 zu bilden. Das weniger wärmebeständige, dafür beispielsweise besser zum Fördern des Betriebsmittels geeignete Material M2 wird hingegen für das andere Bauteil 33 eingesetzt.

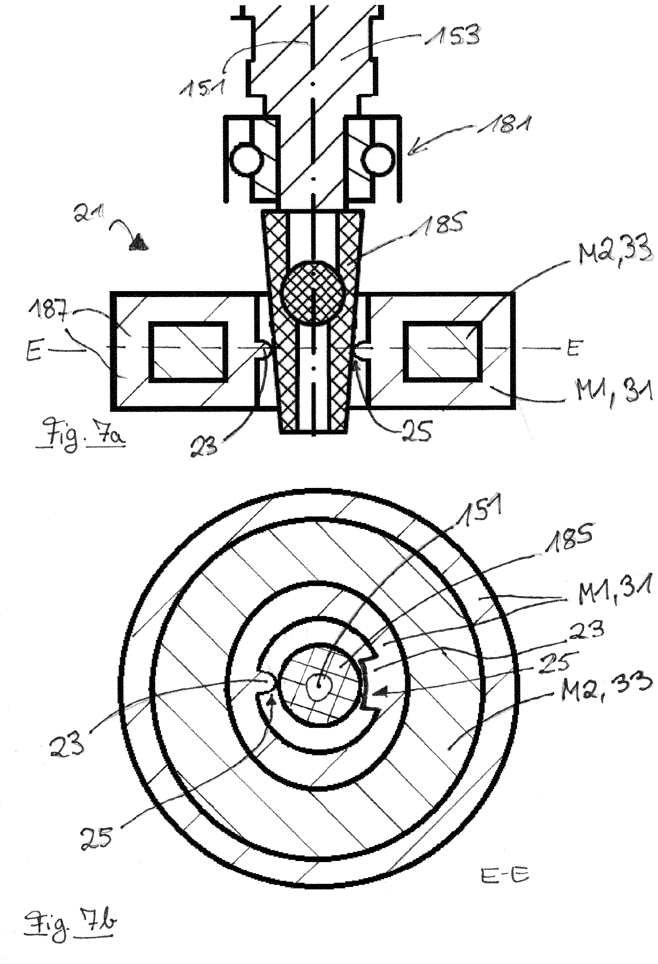

In der Variante gemäß Fig. 7a und 7b ist das aus dem Material M2 bestehende Bauteil 31 von dem anderen Bauteil 33, das aus dem Material M1 hergestellt ist und die Übergabestellen 23 bildet, vollständig umgeben. Für das Bauteil 31 kann folglich erfindungsgemäß ein Material M1 gewählt werden, das zwar zum Herauslösen einzelner Fasern neigt, dafür aber z.B. relativ viel Betriebsmittel pro Volumeneinheit speichern kann.

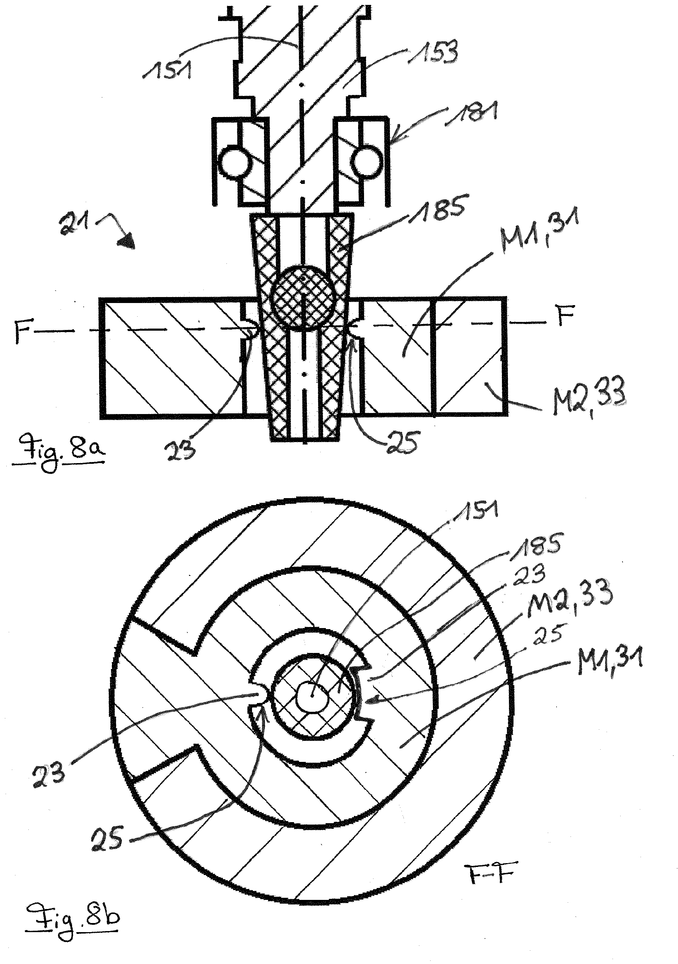

In dem Ausführungsbeispiel der Fig. 8a und 8b ist das aus dem Material M1 bestehende Bauteil 31 von dem das Material M2 aufweisenden Bauteil 33 - bezogen auf die Rotationsachse 151 - in Umfangsrichtung nur teilweise umgeben. So kann beispielsweise das Betriebsmittel dem radial inneren Bauteil 31 umfangsseitig direkt zugeführt werden, während dem radial äußeren Bauteil 33 ausschließlich eine Speicherfunktion zukommt. Dabei kann das äußere Bauteil 33 eine höhere Speicherfähigkeit und eine geringe Eignung zur Förderung des Betriebsmittels aufweisen als das innere Bauteil 31.

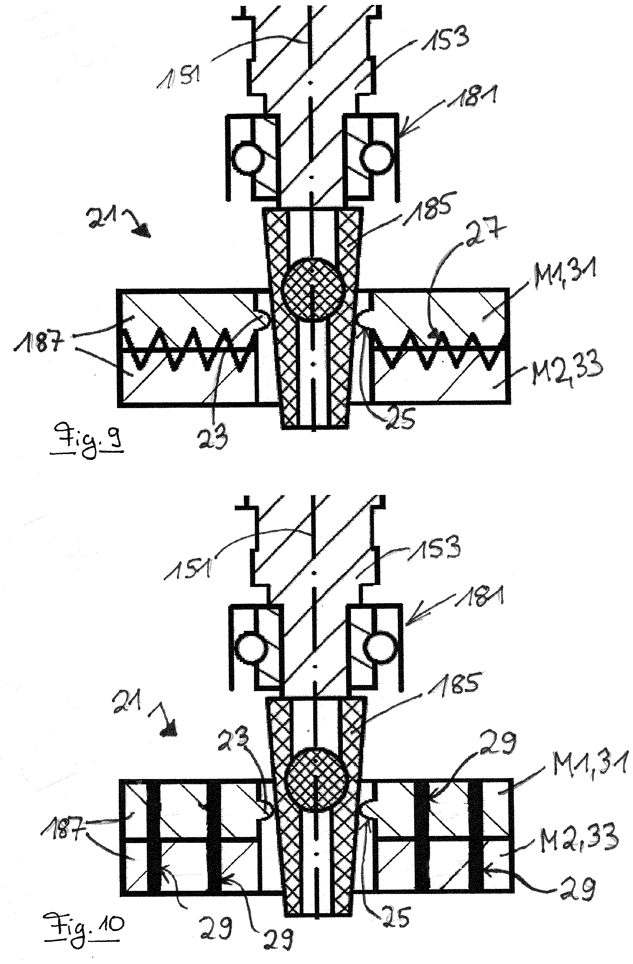

In der nicht erfindungsgemäßen Variante der Fig. 9 sind zwei übereinander liegende, jeweils scheibenförmigen Bauteile 31, 33 miteinander vernäht. Der Betriebsmittelspeicher 21 kann hierdurch als Ganzes gehandhabt werden. Außerdem kann durch das Vernähen dafür gesorgt werden, dass die beiden Bauteile 31, 33 an der Nahtstelle 27 über ihre gesamte Fläche eng aneinander anliegen, so dass über die gesamte Querschnittsfläche - bezogen auf die Rotationsachse 151 - der Bauteile 31, 33 ein optimaler Übergang für das Betriebsmittel vorhanden ist.

Im nicht erfindungsgemäßen Beispiel der Fig. 10 sind die Bauteile 31, 33 des Betriebsmittelspeichers 21 von mehreren stiftförmigen Verbindungselementen 29 durchdrungen, die in zuvor in den Bauteilen 31, 33, hergestellten Aussparungen angeordnet sind. Die Verbindungselemente 29 können jeweils aus einem Material hergestellt sein, welches das jeweilige Betriebsmittel besonders gut fördert, so dass eine optimale Verteilung des Betriebsmittels zwischen den einzelnen Bauteilen 31, 33 sichergestellt ist.

Anders als in den Fig. 6 bis 10 dargestellt kann der Betriebsmittelspeicher 21 in alternativen Ausgestaltungen auch mehr als zwei Bauteile 31, 33 z.B. in Form von Materiallagen umfassen. So kann beispielsweise eine grundsätzlich beliebige Anzahl einzelner Filzscheiben übereinandergestapelt und z.B. durch Vernähen gemäß Fig. 9 oder durch ein oder mehrere Verbindungselemente gemäß Fig. 10 zu einer als Ganzes handhabbaren Einheit zusammengefasst werden.

### Bezugszeichenliste

- 21: Betriebsmittelspeicher
- 23: Übergabestelle
- 25: gekrümmter Kontaktbereich
- 27: Nahtstelle
- 29: Verbindungselement
- 31: Bauteil
- 33: Bauteil
- 104: Schutzeinrichtung
- 105: Kühlrippe
- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not-bzw. Fanglager
- 217: Motorstator
- 219: Zwischenraum
- 221: Wandung
- 223: Labyrinthdichtung

- M1: erstes Material
- M2: zweites Material

## Patentansprüche

1. Vakuumpumpe (111), insbesondere Turbomolekularvakuumpumpe, umfassend:
einen Rotor (149) mit einer Rotorwelle (153),
ein Drehlager (181) zur Lagerung der Rotorwelle (153),
ein flüssiges Betriebsmittel zur Versorgung des Drehlagers (181), und
einen Betriebsmittelspeicher (21) mit zum Speichern des Betriebsmittels geeignetem Speichermaterial,
wobei das Speichermaterial mindestens zwei verschiedene Materialien (M1, M2) umfasst, **dadurch gekennzeichnet, dass**
die Materialien (M1, M2) verschiedene Filzmaterialien
sind, welche eine unterschiedlich große Neigung zu einem Herauslösen einzelner Filzfasern aufweisen;
wobei das Filzmaterial, welches weniger zum Herauslösen der Filzfasern neigt,
das Filzmaterial, welches mehr zum Herauslösen der Filzfasern neigt, zumindest teilweise umgibt.

2. Vakuumpumpe (111) nach Anspruch 1,
wobei der Betriebsmittelspeicher (21) mindestens zwei Bauteile (31, 33) umfasst, und wobei mindestens ein Bauteil (31) aus dem ersten Material (M1) besteht und mindestens ein weiteres Bauteil (33) aus dem zweiten Material (M2) besteht, das von dem ersten Material (M1) verschieden ist.

3. Vakuumpumpe (111) nach Anspruch 1 oder 2,
wobei die Materialien (M1, M2) bezogen auf das Betriebsmittel jeweils sowohl speichernd als auch fördernd sind.

4. Vakuumpumpe (111) nach einem der Ansprüche 1 bis 3,
wobei mindestens ein Material (M1, M2) ein Filzmaterial ist, welches aus einem Kunststoff hergestellt ist, vorzugsweise aus Polyester, Polyimid, Polyaramid oder PBO.

5. Vakuumpumpe (111) nach einem der vorstehenden Ansprüche,
wobei mindestens ein Material (M1, M2) einer Oberflächenbehandlung, insbesondere einem Sengen und/oder einer Thermofixierung und/oder einer Beschichtung, unterzogen wurde.

6. Vakuumpumpe (111) nach einem der vorstehenden Ansprüche,
wobei mindestens ein Material (M1, M2) eine Stützstruktur, insbesondere ein Stützgitter, aufweist.

7. Vakuumpumpe (111) nach einem der vorstehenden Ansprüche,
wobei an dem Betriebsmittelspeicher (21) mindestens ein Übergabeabschnitt (23) ausgebildet ist, welcher das Betriebsmittel an das Drehlager (181) oder eine Fördereinrichtung übergibt, und wobei der Übergabeabschnitt (23) einen gekrümmten Kontaktbereich (25) aufweist, welcher insbesondere einen Krümmungsradius (R1, R2) größer oder gleich 0,2 mm aufweist.

8. Vakuumpumpe (111) nach Anspruch 7,
wobei sowohl das Speichermaterial des Betriebsmittelspeichers (21) als auch der Übergabeabschnitt (23) aus Filzmaterial hergestellt ist.

9. Vakuumpumpe (111) nach einem der vorstehenden Ansprüche,
wobei die Materialien (M1, M2) miteinander verbunden sind, insbesondere durch Vernähen (27) oder Verfilzen.

10. Vakuumpumpe (111) nach einem der vorstehenden Ansprüche,
wobei die Materialien (M1, M2) durch wenigstens ein Verbindungselement (29) miteinander verbunden sind, wobei das Verbindungselement (29) bezogen auf das Betriebsmittel fördernd ausgebildet ist.

11. Vakuumpumpe (111) nach Anspruch 1,
wobei das Filzmaterial, welches weniger zum Herauslösen der Filzfasern neigt, ein Polyester ist, und das Filzmaterial, welches mehr zum Herauslösen der Filzfasern neigt, ein Polyimid ist.

12. Vakuumpumpe (111) nach einem der vorstehenden Ansprüche,
wobei die Materialien (M1, M2) sich bezogen auf das Betriebsmittel hinsichtlich ihres Filterwirkungsgrades voneinander unterscheiden, und wobei das Material mit dem höheren Filterwirkungsgrad das Material mit dem niedrigeren Filterwirkungsgrad zumindest teilweise umgibt, oder umgekehrt.

## Claims

1. A vacuum pump (111), in particular a turbomolecular vacuum pump, comprising:
a rotor (149) having a rotor shaft (153);
a rotary bearing (181) for supporting the rotor shaft (153);
a liquid operating medium for supplying the rotary bearing (181); and
an operating medium store (21) comprising storage material suitable for storing the operating medium,
wherein the storage material comprises at least two different materials (M1, M2), **characterized in that**
the materials (M1, M2) are different felt materials which have different tendencies towards releasing individual felt fibers,
wherein the felt material which is less prone to releasing the felt fibers at least partly surrounds the felt material which is more prone to releasing the felt fibers.

2. A vacuum pump (111) in accordance with claim 1,
wherein the operating medium store (21) comprises at least two components (31, 33), and wherein at least one component (31) consists of the first material (M1) and at least one further component (33) consists of the second material (M2) which is different from the first material (M1).

3. A vacuum pump (111) in accordance with claim 1 or claim 2,
wherein the materials (M1, M2) are each both storing and conveying with respect to the operating medium.

4. A vacuum pump (111) in accordance with any one of the claims 1 to 3,
wherein at least one material (M1, M2) is a felt material which is produced from a plastic, preferably polyester, polyimide, polyaramid or PBO.

5. A vacuum pump (111) in accordance with any one of the preceding claims, wherein at least one material (M1, M2) has been subjected to a surface treatment, in particular a singeing and/or a thermosetting and/or a coating.

6. A vacuum pump (111) in accordance with at least one of the preceding claims,
wherein at least one material (M1, M2) has a support structure, in particular a support grid.

7. A vacuum pump (111) in accordance with any one of the preceding claims, wherein at least one transfer section (23), which transfers the operating medium to the rotary bearing (181) or a conveying device, is formed at the operating medium store (21), and wherein the transfer section (23) has a curved contact region (25) which in particular has a radius of curvature (R1, R2) greater than or equal to 0.2 mm.

8. A vacuum pump (111) in accordance with claim 7,
wherein both the storage material of the operating medium store (21) and the transfer section (23) are produced from felt material.

9. A vacuum pump (111) in accordance with any one of the preceding claims, wherein the materials (M1, M2) are connected to one another, in particular by sewing (27) or felting.

10. A vacuum pump (111) in accordance with any one of the preceding claims, wherein the materials (M1, M2) are connected to one another by at least one connection element (29), wherein the connection element (29) is designed as conveying with respect to the operating medium.

11. A vacuum pump (111) in accordance with claim 1,
wherein the felt material which is less prone to a release of the felt fibers is a polyester and the felt material which is more prone to a release of the felt fibers is a polyimide.

12. A vacuum pump (111) in accordance with any one of the preceding claims, wherein the materials (M1, M2) differ from one another with respect to the operating medium in terms of their filter efficiency, and wherein the material having the higher filter efficiency at least partly surrounds the material having the lower filter efficiency, or vice versa.

## Revendications

1. Pompe à vide (111), en particulier pompe à vide turbomoléculaire, comprenant :
un rotor (149) ayant un arbre de rotor (153),
un palier rotatif (181) pour le montage de l'arbre de rotor (153),
un fluide de fonctionnement liquide pour alimenter le palier rotatif (181), et un réservoir de fluide de fonctionnement (21) comprenant un matériau de stockage approprié pour stocker le fluide de fonctionnement,
le matériau de stockage comprenant au moins deux matériaux différents (M1, M2),
**caractérisée en ce que**
les matériaux (M1, M2) sont des matériaux de feutre différents qui présentent différentes tendances au détachement de fibres de feutre individuelles ; et
le matériau de feutre qui a moins tendance au détachement des fibres de feutre entoure au moins partiellement le matériau de feutre qui a plus tendance au détachement des fibres de feutre.

2. Pompe à vide (111) selon la revendication 1,
dans laquelle le réservoir de fluide de fonctionnement (21) comprend au moins deux composants (31, 33), et
au moins un composant (31) est constitué du premier matériau (M1) et au moins un autre composant (33) est constitué du deuxième matériau (M2) qui est différent du premier matériau (M1).

3. Pompe à vide (111) selon la revendication 1 ou 2,
dans laquelle les matériaux respectifs (M1, M2) sont à la fois accumulateurs et transporteurs par rapport au fluide de fonctionnement.

4. Pompe à vide (111) selon l'une des revendications 1 à 3,
dans laquelle au moins un matériau (M1, M2) est un matériau de feutre qui est fabriqué à partir d'une matière plastique, de préférence à partir de polyester, de polyimide, de polyaramide ou de PBO.

5. Pompe à vide (111) selon l'une des revendications précédentes,
dans laquelle au moins un matériau (M1, M2) a été soumis à un traitement de surface, en particulier à un flambage et/ou à un thermofixage et/ou à un revêtement.

6. Pompe à vide (111) selon l'une des revendications précédentes,
dans laquelle au moins un matériau (M1, M2) présente une structure de soutien, en particulier une grille de soutien.

7. Pompe à vide (111) selon l'une des revendications précédentes,
dans laquelle au moins un tronçon de transfert (23) est réalisé sur le réservoir de fluide de fonctionnement (21), lequel transfère le fluide de fonctionnement au palier rotatif (181) ou à un dispositif de transport, et
le tronçon de transfert (23) présente une zone de contact (25) incurvée qui présente en particulier un rayon de courbure (R1, R2) supérieur ou égal à 0,2 mm.

8. Pompe à vide (111) selon la revendication 7,
dans laquelle aussi bien le matériau de stockage du réservoir de fluide de fonctionnement (21) que le tronçon de transfert (23) sont fabriqués en matériau de feutre.

9. Pompe à vide (111) selon l'une des revendications précédentes,
dans laquelle les matériaux (M1, M2) sont reliés entre eux, en particulier par couture (27) ou feutrage.

10. Pompe à vide (111) selon l'une des revendications précédentes,
dans laquelle les matériaux (M1, M2) sont reliés entre eux par au moins un élément de liaison (29), l'élément de liaison (29) étant transporteur par rapport au fluide de fonctionnement.

11. Pompe à vide (111) selon la revendication 1,
dans laquelle le matériau de feutre qui a moins tendance au détachement des fibres de feutre est un polyester, et le matériau de feutre qui a plus tendance au détachement des fibres de feutre est un polyimide.

12. Pompe à vide (111) selon l'une des revendications précédentes,
dans laquelle les matériaux (M1, M2) diffèrent l'un de l'autre en termes de rendement de filtration par rapport au fluide de fonctionnement, et
le matériau ayant le rendement de filtration plus élevé entoure au moins partiellement le matériau ayant le rendement de filtration plus faible, ou vice versa.
